# EUROPEAN PATENT APPLICATION

(11) **EP 4 667 771 A1**
(43) Date of publication of application: **24.12.2025**
(21) Application number: 25183256.4
(22) Date of filing: 17.06.2025
(51) Int. Cl.: F16D 65/12, F16D 65/02

(54) **BRAKING ASSEMBLY, BRAKE DISC AND WHEEL**

(30) Priority: 18.06.2024 IT 202400013882
(71) Applicant: Poli S.r.l., 26010 Camisano (CR) (IT)
(72) Inventor: CREMONA, Marco, 26019 VAILATE (Cremona) (IT); D'ANGELO, Angelo, 26013 CREMA (Cremona) (IT); DEZIO, William, 24050 ZANICA (Bergamo) (IT); RONCHI, Nino, 20069 VAPRIO D'ADDA (Milano) (IT)
(74) Representative: Cristinelli, Luca

(57) **Abstract**

A braking assembly (100) for a wheel (W) is described. The braking assembly (100) comprises at least a first brake disc (102) having a central axis (x1) and arranged to be coupled to a first side (S1) of the wheel. The first brake disc (102) comprises a wheel coupling face (104) and defines at least one through-hole (106) along an axis (x2) parallel to the central axis (x1) of the first brake disc (102). The at least one through-hole (106) defined by the first brake disc (102) defines at least one flared inner portion (108) towards the wheel coupling face (104). The braking assembly (100) further comprises at least one fastening means (110) comprising a first tapered portion (112), complementary to the flared inner portion (108) defined by the through-hole (106) of the first brake disc (102). The first tapered portion (112) of the fastening means (110) is arranged to abut the flared inner portion (108) defined by the through-hole (106) of the first brake disc (102), when the first brake disc (102) is coupled to the first side (S1) of the wheel.

Also described are a wheel (W), a brake disc (700) and a further braking assembly.

## Description

### Field of the invention

The present invention relates, in general, to the field of brakes for vehicles; in particular, the invention relates to a braking assembly, to a brake disc and to a wheel.

### Prior art

Usually, braking assemblies are coupled to a wheel by means of fastening elements with traditional counterbores.

In addition to braking assemblies having fastening elements with traditional counterbores, braking assemblies are also known which have fastening elements with undercut counterbores.

An example of a braking assembly with fastening elements with undercut counterbores may, for example, be seen in EP2715180.

Disadvantageously, the various braking assemblies made according to the known art described above, due to the counterbores used, have a poor distribution of the clamping force when coupled to a wheel.

### Summary of the invention

An object of the present invention is to provide solutions that make it possible to achieve a better distribution of the force in a braking assembly coupled to a wheel.

The above and other objects and advantages are achieved:
- according to a first aspect of the invention, by a braking assembly having the features defined in claim 1 or in claim 13;
- according to a second aspect of the invention, by a wheel having the features defined in claim 10; and
- according to a third aspect of the invention, by a brake disc having the features defined in claim 12.

Preferred embodiments of the invention are defined in the dependent claims, the content of which is to be understood as an integral part of the present description.

### Brief description of the Figures

The functional and structural features of some preferred embodiments of a braking assembly, a brake disc and a wheel according to the invention will now be described. Reference is made to the accompanying drawings, in which:
- figure 1 is a sectional view of an embodiment of a braking assembly according to the present invention;
- figure 2 shows, in detail, a section of the through-hole of the first brake disc illustrated in figure 1;
- figure 3 shows in section a further embodiment of a braking assembly according to the present invention;
- figure 4 shows in section a further embodiment of a braking assembly according to the present invention;
- figure 5 shows in section a further embodiment of a braking assembly according to the present invention;
- figure 6a shows in section a further embodiment of a braking assembly according to the present invention;
- figure 6b shows in section a further embodiment of a braking assembly according to the present invention;
- figure 6c shows in section a further embodiment of a braking assembly according to the present invention;
- figure 7 is a sectional view of an embodiment of a brake disc according to the present invention;
- figure 8 is a side sectional view of an embodiment of a wheel according to the present invention;
- figure 9 is a perspective view of the wheel of figure 8.

### Detailed description

Before explaining in detail a plurality of embodiments of the invention, it should be clarified that the invention is not limited in its application to the construction details and the configuration of the components shown in the following description or illustrated in the drawings. The invention is capable of assuming other embodiments and of being implemented or practically made in various ways. It must also be understood that the phraseology and terminology have a descriptive purpose and should not be construed as limiting. The use of "include" and "comprise" and their variations are to be understood as including the elements listed hereafter and their equivalents, as well as additional elements and their equivalents.

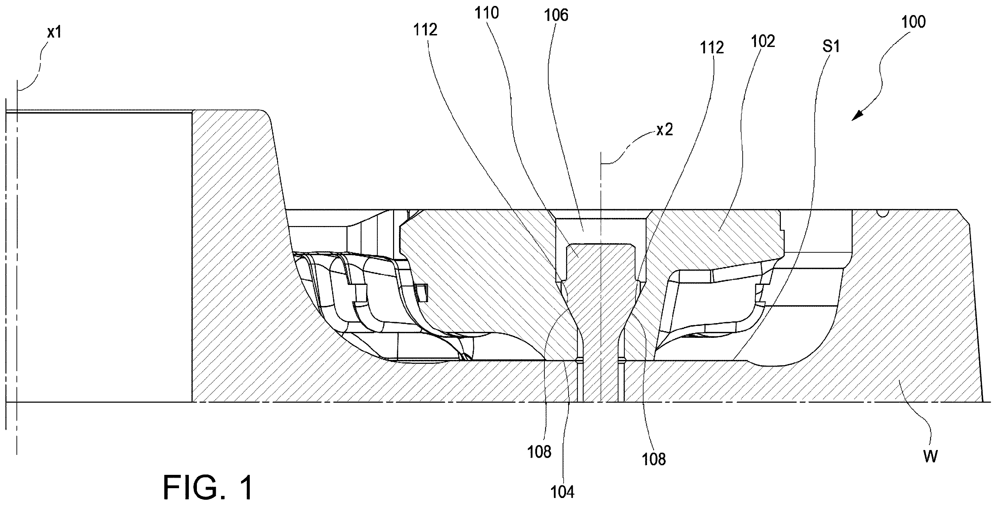

With initial reference to figure 1, an embodiment of a braking assembly 100 for a wheel W, particularly a railway wheel, is described in detail below.

As observable in said figure 1, the braking assembly 100 comprises at least a first brake disc 102 having a central axis x1. Said first brake disc 102 is furthermore arranged to be coupled to a first side S1 of the wheel.

The first brake disc 102 comprises a wheel coupling face 104 and defines at least one through-hole 106 along an axis x2. Said axis x2 is parallel to the central axis x1 of the first brake disc 102.

For example, as observable in figure 1, on the face of the brake disc opposite the wheel coupling face 104, one or more protruding fins may be present, suitable for directing air and promoting the cooling of the brake disc.

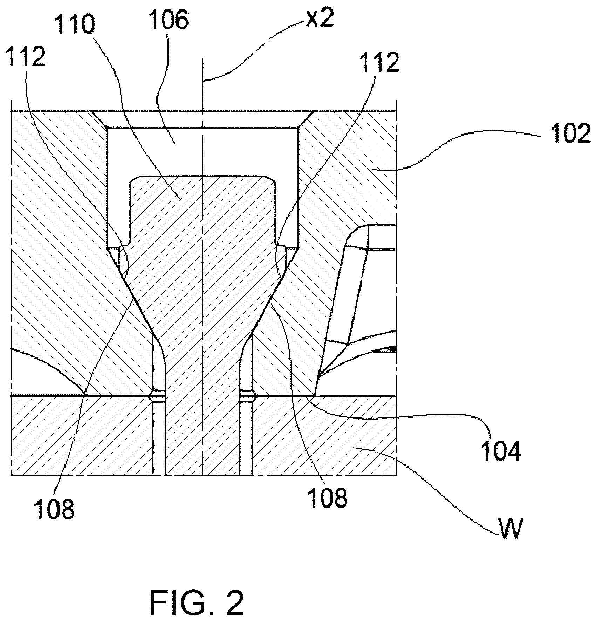

As observable in detail in figure 2, the at least one through-hole 106 defined by the first brake disc 102 defines at least one flared inner portion 108 towards said wheel coupling face 104.

As observable in the figures, by "flared towards said wheel coupling face 104" it can be understood that the diameter of the flared inner portion 108 decreases as it approaches the wheel coupling face 104.

For example, the flared inner portion 108 may be only a part of the inner portion of the through-hole. For example, the flared inner portion 108 may be about one third of the total extension of the inner portion of the through-hole.

With further reference to figure 1, the braking assembly 100 furthermore comprises at least one fastening means 110. Said fastening means 110 comprises a first tapered portion 112, complementary to said flared inner portion 108 defined by the through-hole 106 of the first brake disc 102.

The first tapered portion 112 of the fastening means 110 is arranged to abut the flared inner portion 108 defined by the through-hole 106 of the first brake disc 102, when the first brake disc 102 is coupled to the first side S1 of the wheel W.

In general, when said first brake disc 102 is coupled to the wheel W by the fastening means 110, thanks to the contact between the first tapered portion 112 of the fastening means 110 and the flared inner portion 108 of the through-hole 106 of the first brake disc 102, it is possible to achieve a better distribution of the clamping force in the braking assembly coupled to the wheel, said force being distributed over a wider surface of the fastening element 110 for the same thread diameter compared to a standard fastening element.

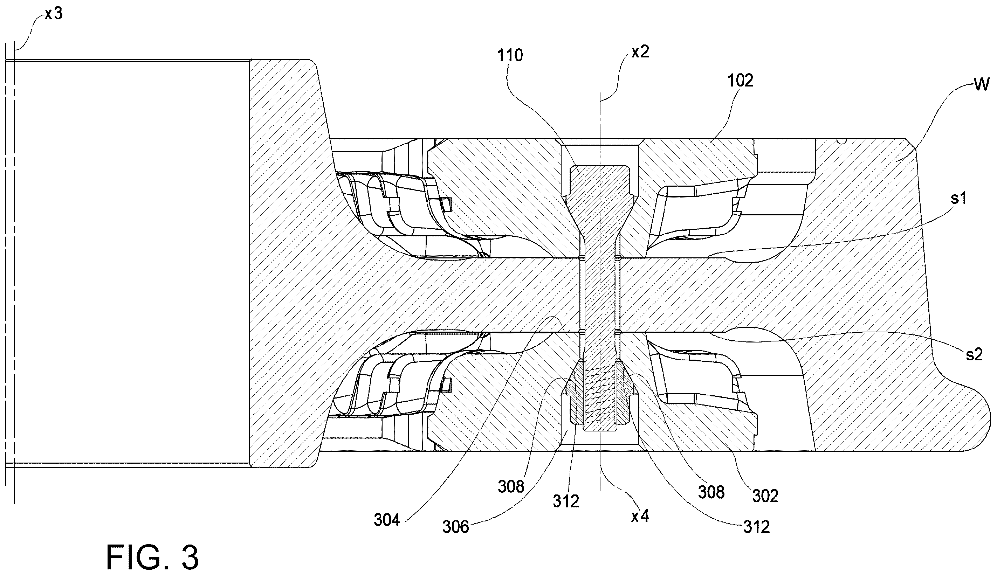

As for example observable in figure 3, the braking assembly may comprise at least a second brake disc 302 having a central axis x3.

The second brake disc 302 may be arranged to be coupled to a second side S2 of the wheel, opposite the first side S1 of the wheel.

The second brake disc 302 may comprise a wheel coupling face 304 and define at least one through-hole 306 along an axis x4 parallel to said central axis x3 of the second brake disc 302.

As may be understood from the figures, the axis x1 of the first brake disc 102 and the axis x3 of the second brake disc 302 may be coincident (i.e., aligned with one another). Furthermore, also the axis x2 of the through-hole 106 of the first brake disc 102 and the axis x4 of the through-hole 306 of the second brake disc 302 may be coincident (i.e., aligned with one another).

The through-hole 306 defined by the second brake disc 302 may define at least one flared inner portion 308 towards the wheel coupling face 304 of the second brake disc 302.

As observable in the figures, by "flared towards said wheel coupling face 304 of the second brake disc 302" it can be understood that the diameter of the flared inner portion 308 decreases as it approaches the wheel coupling face 304 of the second brake disc 302.

Furthermore, the at least one fastening means 110 may comprise a second tapered portion 312, complementary to the flared inner portion 308 defined by the through-hole 306 of the second brake disc 302.

Said second tapered portion 312 of the fastening means 110 may be arranged to abut the flared inner portion 308 of the through-hole 306 of the second brake disc 302, when the second brake disc 302 is coupled to the second side S2 of the wheel.

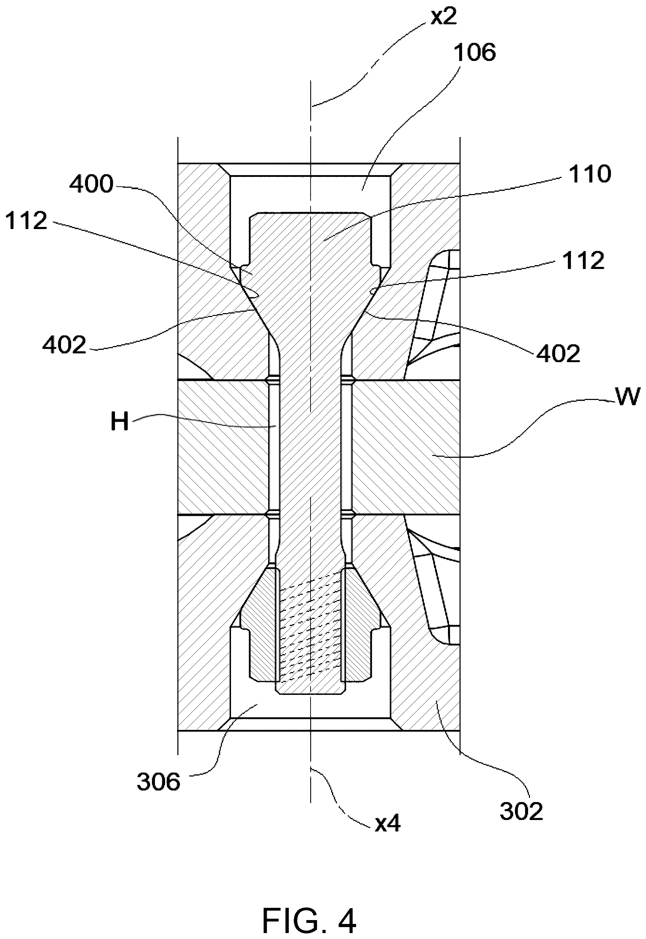

Preferably, as observable in figure 4, the fastening means 110 may comprise a bolt. In this case, the first tapered portion 112 of the fastening means 110 may be a tapered portion 402 of a head 400 of the bolt, for example, an outer tapered portion 402 of a head 400 of the bolt.

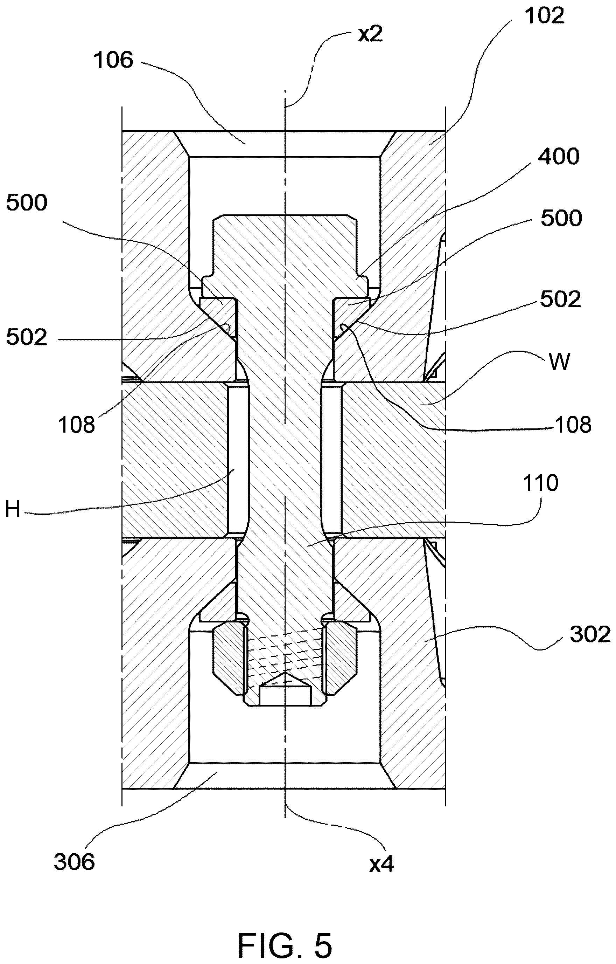

In an alternative, as observable in figure 5, the fastening means 110 may comprise a bolt and at least one spacer element 500 arranged to be placed between a head 400 of the bolt and the flared inner portion 108 of the first brake disc 102. In this case, the first tapered portion 112 of the fastening means 110 may be a tapered portion 502 of said spacer element 500, for example, an outer tapered portion 502 of said spacer element 500.

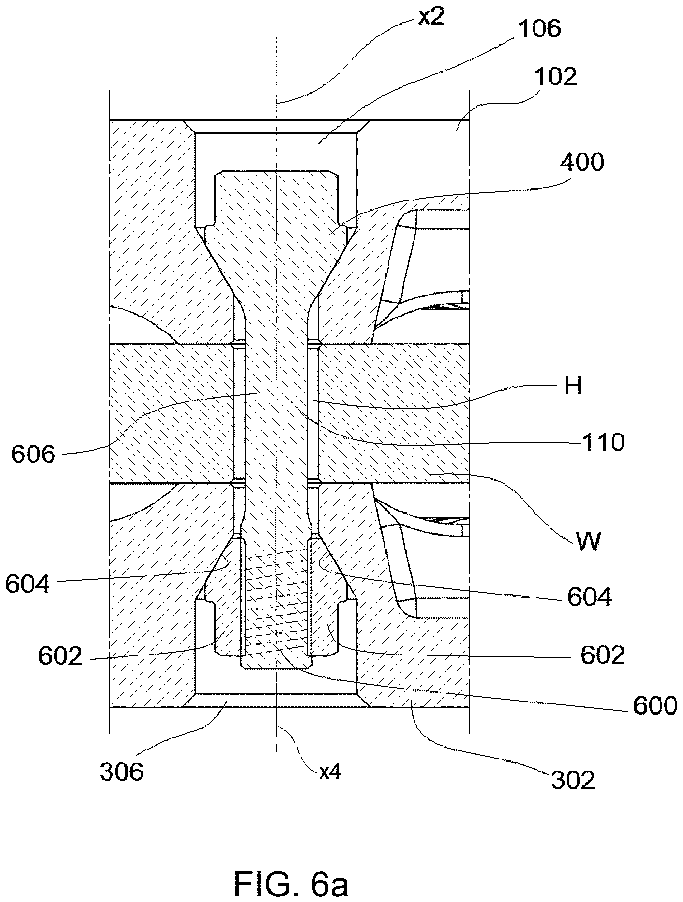

Preferably, as observable in figure 6a, when the fastening means 110 comprises a bolt, said bolt may comprise a threaded end 600, arranged opposite the head 400 of the bolt. In this case, the fastening means 110 may further comprise a nut 602 arranged to be screwed onto the threaded end 600, so as to couple the second brake disc 302 to the second side S2 of the wheel W. The second tapered portion 312 of the fastening means 110 may be a tapered portion 604 of the nut 602, for example, an outer tapered portion 604 of the nut 602.

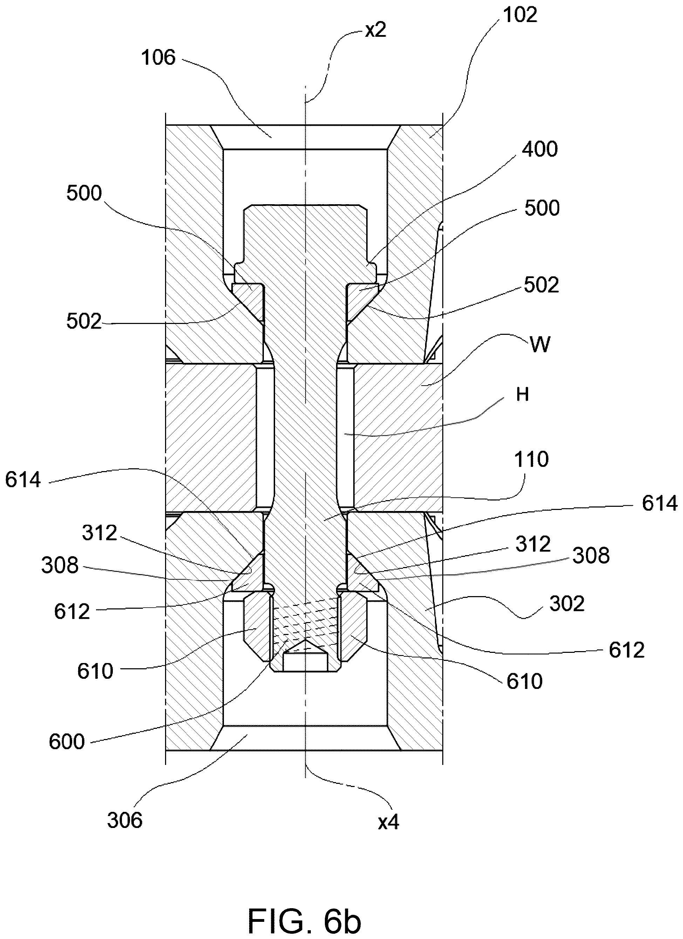

Preferably, in an alternative observable in figure 6b, when the fastening means 110 comprises a bolt, said bolt may comprise a threaded end 600, arranged opposite said head 400 of the bolt. In this case, the fastening means 110 may further comprise a nut 610 arranged to be screwed onto said threaded end 600, so as to couple said second brake disc 302 to said second side S2 of the wheel W, and at least one second spacer element 612 arranged to be placed between said nut 610 and said flared inner portion 308 of the second brake disc 302. The second tapered portion 312 of the fastening means 110 may be a tapered portion 614 of said at least one second spacer element 612.

For example, a spacer element 500, 612 may be a spacer.

In a further implementation example not illustrated in the figures, when the fastening means comprises a bolt, said bolt may comprise a groove arranged on one end of the bolt opposite said head of the bolt. The fastening means may further comprise a bush arranged to be shape-coupled or snap-fitted with said groove, so as to couple said second brake disc to said second side of the wheel. For example, the portion of the bush adapted to engage with the groove may be a rib radially projecting toward the central axis of the bush. The fastening means may further comprise a second spacer element arranged to be placed between said bush of the bolt and said flared inner portion of the second brake disc. The second tapered portion of the fastening means may be a tapered portion 614 of said second spacer element 612, for example, an outer tapered portion 614 of said second spacer element 612.

As for example observable in figure 6a, the fastening means 110 may comprise an intermediate portion 606 arranged to be housed in a through-hole H defined by the wheel W, when the first brake disc 102 is coupled to the first side S1 of the wheel W and/or the second brake disc 302 is coupled to the second side S2 of the wheel W.

As may be understood from the figures, the through-hole H may have a central axis coinciding with the axis x2 of the through-hole 106 of the first brake disc 102 and the axis x4 of the through-hole 306 of the second brake disc 302.

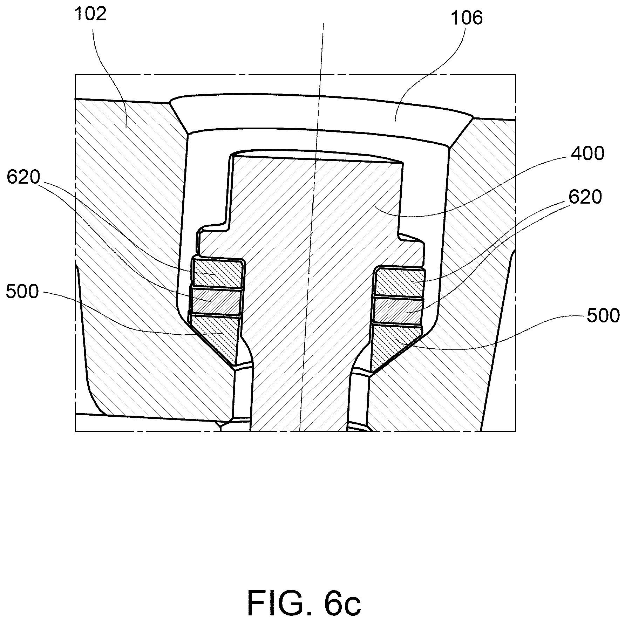

Preferably, as observable in figure 6c, the braking assembly may comprise first elastic means, for example at least two-disc springs 620, arranged to be placed between said head 400 of the bolt and said at least one spacer element 500.

Preferably, the braking assembly may comprise second elastic means, for example again two-disc springs, arranged to be placed between said nut 602, 610 and said at least one second spacer element 612.

For example, the two-disc springs may be arranged in series or in parallel with one another.

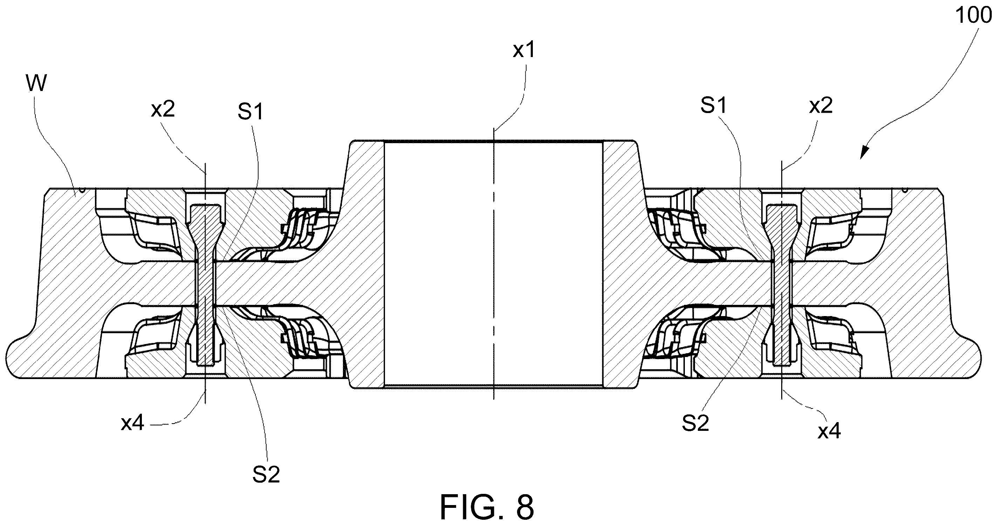

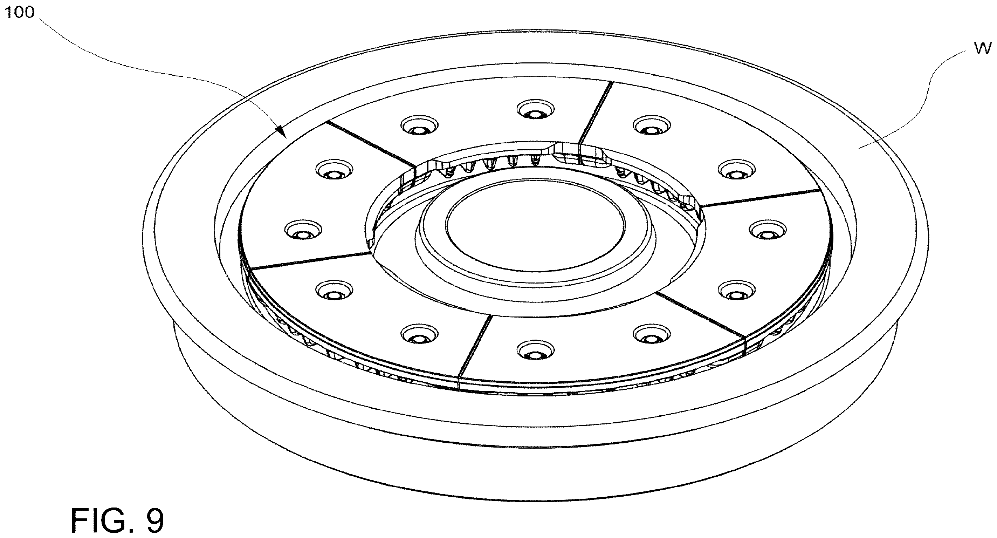

In a further aspect, the present invention relates to a wheel W. As observable in figure 8 and in figure 9, the wheel W comprises a first side S1, a second side S2 and a braking assembly 100 according to any one of the embodiments described above.

Preferably, the wheel W may be a railway wheel.

In a further aspect, the present invention relates to a brake disc 700.

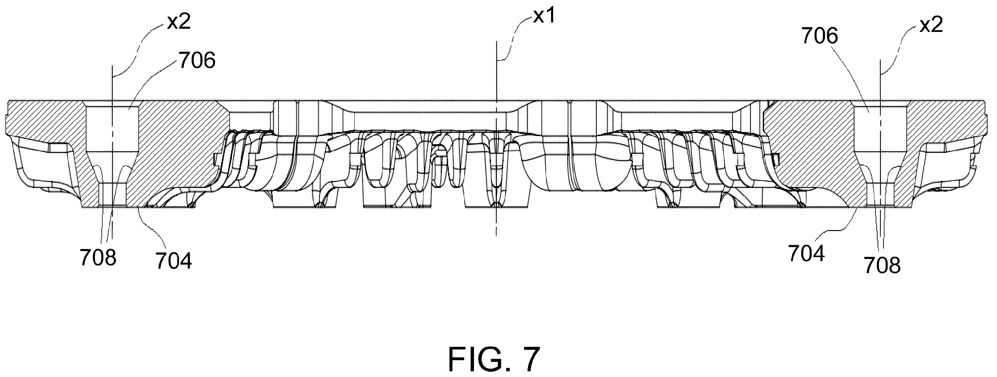

As for example observable in figure 7, the brake disc 700 has a central axis x1. Said brake disc 700 comprises:
- a wheel coupling face 704;
- at least one through-hole 706 along an axis x2 parallel to the central axis x1 of the brake disc.

The through-hole 706 of the brake disc 700 comprises at least one flared inner portion 708 towards said wheel coupling face 704.

For example, the brake disc 700 may be made of steel and cast-iron alloys.

Preferably, the through-hole 706 of the brake disc 700 may be made at a braking/friction surface of the disc.

In yet a further aspect, the present invention relates to a further braking assembly. The following embodiments are described with reference to the figures already discussed above.

In one embodiment, the braking assembly 100 for a railway wheel W comprises:
- a first brake disc 102 arranged to be coupled to a first side S1 of the wheel W and defining a first through-hole 106 along an axis x2 parallel to the central axis x1 of the first brake disc 102 and having a first flared inner portion 108;
- a second brake disc 302 arranged to be coupled to a second side S2 of the wheel W and defining a second through-hole 306 along an axis x4 parallel to the central axis x3 of the second brake disc 302 and having a second flared inner portion 308;
- a bolt assembly, or called bolt group 110, 400, 500, having a first tapered portion 112, 402, 502 complementary to the first flared inner portion 108 and arranged to abut the first flared inner portion 108 when the first brake disc 102 is coupled to the wheel W; and
- a nut 110, 602 having a second tapered portion 312, 604 complementary to the second flared inner portion 308 and arranged to abut the second flared inner portion 308 when the second brake disc 302 is coupled to the wheel, wherein the nut 110, 602 is configured to engage a threaded end 600 of the bolt assembly to affix the first and second brake discs 102, 103 to the wheel W.

Preferably, said bolt assembly 110, 400, 500 may comprise an intermediate portion 606 extending between the first tapered portion 112, 402, 502 and the second tapered portion 312, 604, and wherein the intermediate portion 606 is arranged to be housed in a through-hole H defined by the wheel W when the first brake disc 102 is coupled to the first side S1 of the wheel W and/or the second brake disc 302 is coupled to the second side S2 of the wheel W.

Preferably, the through-hole H of the wheel W, the first through-hole 106 and the second through-hole 306 may be concentric.

Preferably, the first tapered portion 112, 402, 502 may be a tapered portion 402 of a head 400 of the bolt assembly 110, 400, 500.

Preferably, the first tapered portion 112, 402, 502 may be a tapered portion 502 of a spacer element 500, and wherein said spacer element 500 is arranged to be disposed between the head 400 of the bolt assembly 110, 400, 500 and the first flared inner portion 108 of the first brake disc 102.

The present invention is preferably applicable to the railway transport sector; however, it is also applicable to any further transport sector, for example to the road wheeled transport sector or metropolitan transport.

The advantage achieved is thus that of having provided solutions which make it possible to achieve a better distribution of the force in a braking assembly coupled to a wheel.

Various aspects and embodiments of a braking assembly, a brake disc and a wheel according to the invention have been described. It is intended that each embodiment may be combined with any other embodiment. The invention is also not limited to the described embodiments but may be varied within the scope defined by the appended claims.

## Claims

1. A braking assembly (100) for a wheel (W), particularly a railway wheel, the braking assembly (100) comprising:
- at least a first brake disc (102) having a central axis (x 1) and arranged to be coupled to a first side (S1) of the wheel;
wherein said first brake disc (102) comprises a wheel coupling face (104) and defines at least one through-hole (106) along an axis (x2) parallel to said central axis (x1) of said first brake disc (102);
wherein said at least one through-hole (106) defined by the first brake disc (102) defines at least one flared inner portion (108) towards said wheel coupling face (104);
- at least one fastening means (110) com-prising a first tapered portion (112), complementary to said flared inner portion (108) defined by the through-hole (106) of the first brake disc (102);
wherein said first tapered portion (112) of the fastening means (110) is arranged to abut said flared inner portion (108) defined by the through-hole (106) of the first brake disc (102), when said first brake disc (102) is coupled to said first side (S1) of the wheel.

2. The braking assembly according to claim 1, comprising at least a second brake disc (302) having a central axis (x3) and arranged to be coupled to a second side (S2) of the wheel (W) opposite said first side (S1) of the wheel;
wherein said second brake disc (302) comprises a wheel coupling face (304) and defines at least one through-hole (306) along an axis (x4) parallel to said central axis (x3) of said second brake disc (302);
wherein said through-hole (306) defined by said second brake disc (302) defines at least one flared inner portion (308) towards said wheel coupling face (304) of said second brake disc (302);
wherein said at least one fastening means (110) comprises a second tapered portion (312), complementary to said flared inner portion (308) defined by the through-hole (306) of the second brake disc (302);
wherein said second tapered portion (312) of the fastening means (110) is arranged to abut said flared inner portion (308) of the through-hole (306) of the second brake disc (302), when said second brake disc (302) is coupled to said second side (S2) of the wheel (W).

3. The braking assembly according to claim 1 or 2, wherein said fastening means (110) comprises a bolt and said first tapered portion (112) of the fastening means (110) is a tapered portion (402) of a head (400) of the bolt.

4. The braking assembly according to claim 1 or 2, wherein said fastening means (110) comprises a bolt and at least one spacer element (500) arranged to be placed between a head (400) of the bolt and said flared inner portion (108) of the first brake disc (102);
said first tapered portion (112) of the fastening means (110) is a tapered portion (502) of said spacer element (500).

5. The braking assembly according to any one of claims 3 or 4, wherein said bolt comprises a threaded end (600) arranged opposite said head (400) of the bolt;
said fastening means (110) further comprising a nut (602) arranged to be screwed onto said threaded end (600), so as to couple said second brake disc (302) to said second side (S2) of the wheel (W);
wherein said second tapered portion (312) of the fastening means (110) is a tapered portion (604) of said nut (602).

6. The braking assembly according to any one of claims 3 or 4, wherein said bolt comprises a threaded end (600) arranged opposite said head (400) of the bolt;
said fastening means (110) also comprising:
- a nut (610) arranged to be screwed onto said threaded end (600), so as to couple said second brake disc (302) to said second side (S2) of the wheel (W);
- at least a second spacer element (612) arranged to be placed between said nut and said flared inner portion (308) of the second brake disc (302);
wherein said second tapered portion (312) of the fastening means (110) is a tapered portion (614) of said at least one second spacer element (612).

7. The braking assembly according to any one of the preceding claims, wherein said fastening means (110) comprises an intermediate portion (606) arranged to be received in a through-hole (H) defined by the wheel (W), when the first brake disc (102) is coupled to said first side (S1) of the wheel (W) and/or said second brake disc (302) is coupled to said second side (S2) of the wheel (W).

8. The braking assembly according to any one of claims 3 to 7, wherein said braking assembly comprises first elastic means, preferably at least two-disc springs (620), arranged to be placed between said head (400) of said bolt and said at least one spacer element (500).

9. The braking assembly according to any one of claims 4 to 8, wherein said assembly comprises second elastic means, preferably at least two-disc springs, arranged to be placed between said nut (602, 610) and said at least one second spacer element (612).

10. A wheel (W) comprising:
- a first side (S1) and a second side (S2);
- a braking assembly (100) according to any of claims 1 to 9.

11. The wheel according to claim 10, wherein said wheel is a railway wheel.

12. A brake disc (700), having a central axis (x1), and comprising:
- a wheel coupling face (704);
- at least one through-hole (706) along an axis (x2) parallel to said central axis (xl) of the brake disc;
wherein said through-hole (706) of said brake disc (700) comprises at least one flared inner portion (708) towards said wheel coupling face (704).

13. A brake assembly (100) for a railway wheel (W) comprising:
- a first brake disc (102) arranged to be coupled to a first side (S1) of the wheel (W) and defining a first through-hole (106) along an axis (x2) parallel to the central axis (x1) of the first brake disc (102) and having a first flared inner portion (108);
- a second brake disc (302) arranged to be coupled to a second side (S2) of the wheel (W) and defining a second through-hole (306) along an axis (x4) parallel to the central axis (x3) of the second brake disc (302) and having a second flared inner portion (308);
- a bolt assembly (110, 400, 500) having a first tapered portion (112, 402, 502) complementary to the first flared inner portion (108) and arranged to abut against the first flared inner portion (108) when the first brake disc (102) is coupled to the wheel (W); and
- a nut (110, 602) having a second tapered portion (312, 604) complementary to the second flared inner portion (308) and arranged to abut the second flared inner portion (308) when the second brake disc (302) is coupled to the wheel, wherein the nut (110, 602) is configured to engage a threaded end (600) of the bolt assembly to affix the first and second brake discs (102, 103) to the wheel (W).

14. The braking assembly according to claim 13, wherein said bolt assembly (110, 400, 500) comprises an intermediate portion (606) extending between the first tapered portion (112, 402, 502) and the second tapered portion (312, 604), and wherein the intermediate portion (606) is arranged to be accommodated in a through-hole (H) defined by the wheel (W) when the first brake disc (102) is coupled to the first side (S1) of the wheel (W) and/or the second brake disc (302) is coupled to the second side (S2) of the wheel (W).

15. The braking assembly according to claim 14, wherein the through-hole (H) of the wheel (W), the first through-hole (106) and the second through-hole (306) are concentric

16. The braking assembly according to claim 13, wherein the first tapered portion (112, 402, 502) is a tapered portion (402) of a head (400) of the bolt assembly (110, 400, 500).

17. The braking assembly according to claim 13, wherein the first tapered portion (112, 402, 502) is a tapered portion (502) of a spacer element (500), and wherein said spacer element (500) is arranged between the head (400) of the bolt assembly (110, 400, 500) and the first flared inner portion (108) of the first brake disc (102).
